# EUROPEAN PATENT APPLICATION

(11) **EP 4 509 392 A1**
(43) Date of publication of application: **19.02.2025**
(21) Application number: 23191886.3
(22) Date of filing: 17.08.2023
(51) Int. Cl.: B62H 5/00, B62J 7/04, E05B 71/00

(54) **BICYCLE CARRIER WITH HOLDER FOR A LOCK**

(71) Applicant: Tsai Jung Enterprise Co., Ltd., Changhua County 509004 (TW)
(72) Inventor: CHIU, Chih-Wen, 509004 Shengang Township, Changhua County (TW)
(74) Representative: Cabinet Chaillot

(57) **Abstract**

A bicycle carrier (1) is provided. The bicycle carrier (1) includes a front unit (200), a rear unit (300), and a limiting unit (400). A lock (500) is disposed between the front space (201) and the rear space (301) with two ends of the lock (500). The front end of the lock (500) is complemented with a limiting arc surface (411) and movably limited thereby, the rear end of the lock (500) is supported in the rear space (301), so that the lock (500) is accommodated in the bicycle carrier (1). When moving a limiting unit (400) to the direction of the rear unit (300), the limiting unit (400) releases the lock (500), so that the lock (500) can be removed from the front space (201) and the rear space (301).

## Description

### FIELD OF THE DISCLOSURE

The present disclosure relates to a bicycle carrier, and more particularly to a bicycle carrier with a movable lock.

### BACKGROUND OF THE DISCLOSURE

Bicycles are a convenient means of transportation for short-distance commuting. Compared with automobiles and motorcycles with lock and anti-theft mechanisms, bicycles are still easy targets for thieves, especially at stations, schools, MRT stations, etc. In order to prevent bicycles from being stolen, bicycle owners mostly use locks to lock bicycle tires and carriers together, or lock bicycles on immovable facilities (parking racks, railings). The aforementioned locks are for example chain locks, U-shaped locks or folding locks, etc.

Due to some locks are made of high-hardness materials in order to prevent damage, the locks are heavy, and even the size of the locks is not small. Therefore, the conventional locks have the problem that is not easy to carry, so that carrying and storage of bicycle locks is one of the key points of development of related industries. In order to solve the above-mentioned problems, most manufacturers provide an additional device to assemble the lock on the bicycle. The additional device provides storage for the lock when it is not in use, and it can be detached from the additional device for locking when in use.

In fact, these additional devices are mostly provided with disposing the lock on the bicycle frame of the bicycle abruptly when the lock is not in use. For example, can be found in patents M538900), M531(420), M509758, CN21400)1886U, CN210634672U, and CN209581675U. However, in actual use, when the user is riding or leading the car, or even getting on or off vehicles, it is easy to cause damage due to collision or directly falling off and hitting the ground from the additional device.

### SUMMARY OF THE DISCLOSURE

The present disclosure provides a bicycle carrier, including a front unit, a rear unit, and a limiting unit. In detail, the front unit and the rear unit are spaced apart; wherein the front unit has a front space and the rear unit has a rear space; wherein the limiting unit has an outer portion and an inner portion connected to the outer portion, the inner portion is located in the front space, and the outer portion extends outside the front unit; wherein the inner portion has a limiting arc surface facing the direction of the rear space; a lock is disposed in the front space and the rear space with two end of the lock; wherein the front end of the lock is complemented with the limiting arc surface and moveably limited by the limiting arc surface, the rear end of the lock is limited in the rear space, so that the lock is accommodated in the bicycle carrier; wherein when moving the outer portion of the limiting unit to the direction of the rear unit, the limiting arc surface of the limiting unit is away from the lock and release the lock, so that the lock can be removed from the front space and the rear space.

The present disclosure provides a bicycle carrier with the lock accommodated in the carrier. Unlike the conventional locks that are required to be assembled on the frame of the bicycle with additional devices, the present disclosure provides a bicycle carrier with a lock that can avoid accidental collision between the lock and the bicycle frame, and also avoid surface damage to the bicycle that caused by installation of the additional devices on the bicycle frame.

### BRIEF DESCRIPTION OF THE DRAWINGS

The described embodiments may be better understood by reference to the following description and the accompanying drawings in which:
FIG. 1 is a perspective schematic view of the bicycle carrier with a lock of the present disclosure;
FIG. 2 is a schematic perspective view of the bicycle carrier of the present disclosure;
FIG. 3 is a perspective schematic view of another angel of the bicycle carrier of the present disclosure;
FIG. 4 is a sectional schematic view of line IV-IV of FIG. 3;
FIG. 5 is a sectional schematic view of line V-V of FIG. 3;
FIG. 6 is a schematic view of the movement of moving the limiting unit relative to the front unit of FIG. 4;
FIG. 7 is a schematic view of the movement of switching the switch so that the switch stopper moves from the switch hole outward;
FIG. 8 is a schematic view of the switch stopper of the switch abutting against the outer side of the front unit;
FIG. 9 is a schematic view of moving the carrier clip and disposing one end of the lock into the rear unit;
FIG. 10 is a schematic view of disposing another end of the lock into the front unit according to FIG. 9.
FIG. 11 is a perspective sectional schematic view of the bicycle carrier with lock accommodated of the present disclosure;
FIG. 12 is an exploded schematic view of the front unit, the limiting unit, the compression spring, the switch, the switch shaft, and the switch shaft of the present disclosure; and
FIG. 13 is a perspective schematic view of the bicycle carrier without the carrier clip of the present disclosure.

### DETAILED DESCRIPTION OF THE EXEMPLARY EMBODIMENTS

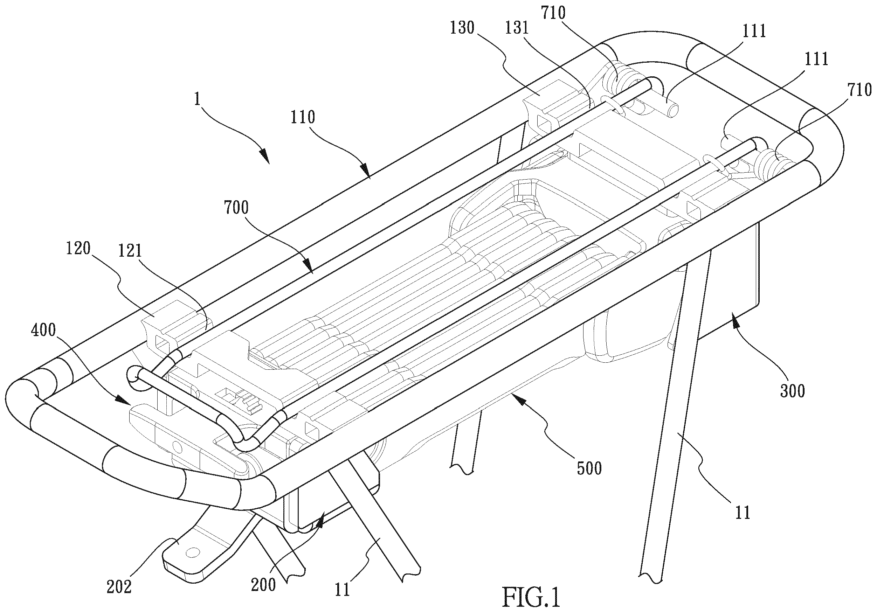

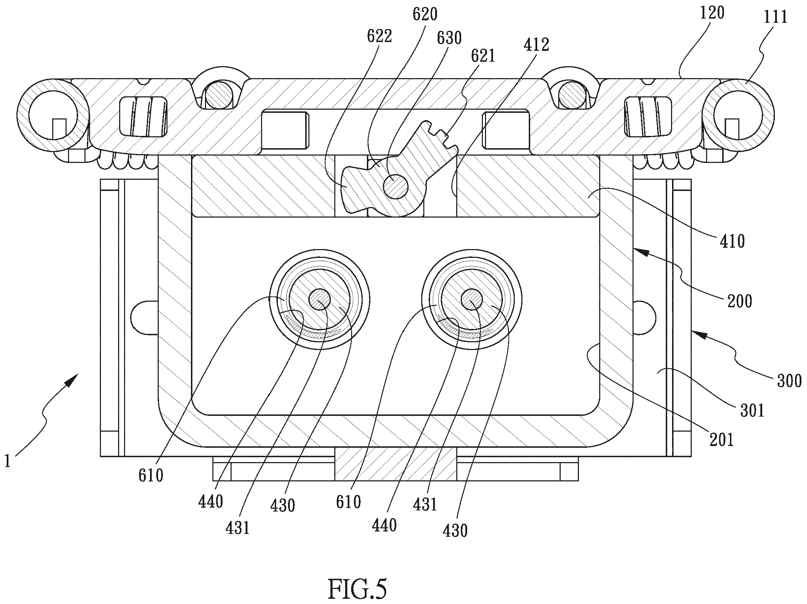

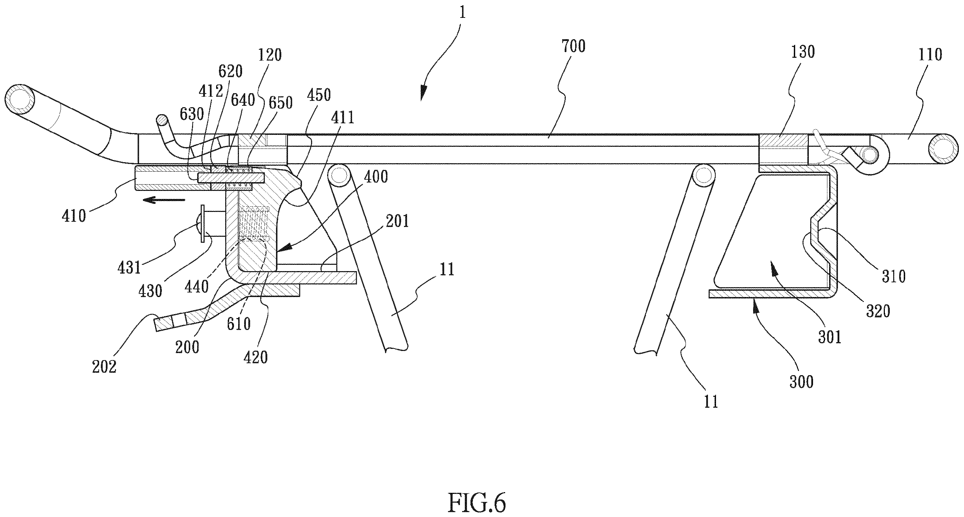

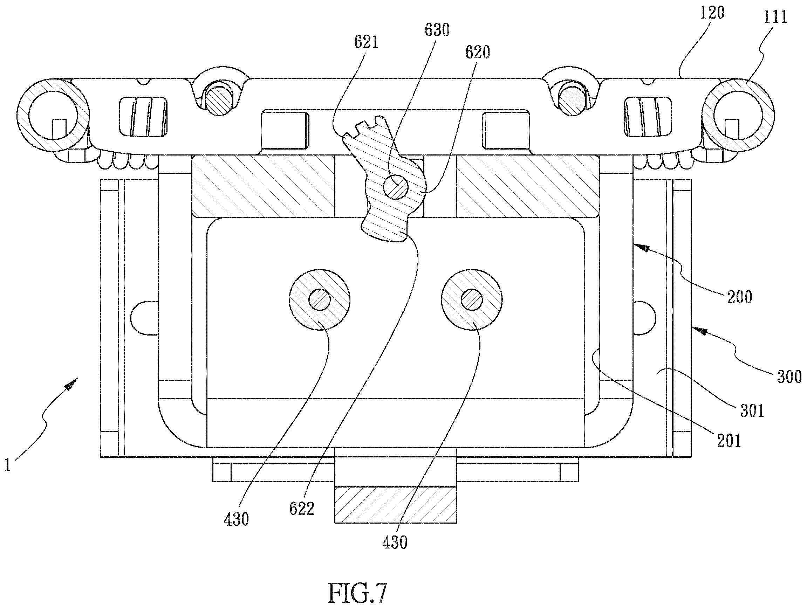

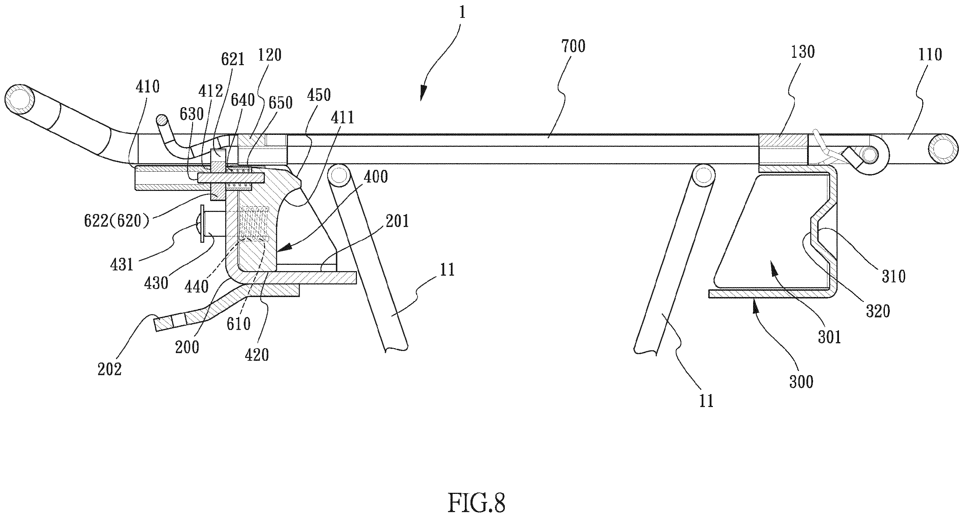

Referring to FIGS. 1-8, the present disclosure provides a bicycle carrier (1), including: a front unit (200), a rear unit (300), and a limiting unit (400). The front unit (200) and the rear unit (300) are spaced apart; wherein the front unit (200) has a front space (201) and the rear unit (300) has a rear space (301). The limiting unit (400) has an outer portion (410) and an inner portion (420) connected to the outer portion (410), the inner portion (420) is located in the front space (201), and the outer portion (410) extends outside the front unit (200); wherein the inner portion (420) has a limiting arc surface (411) facing the direction of the rear space (301).

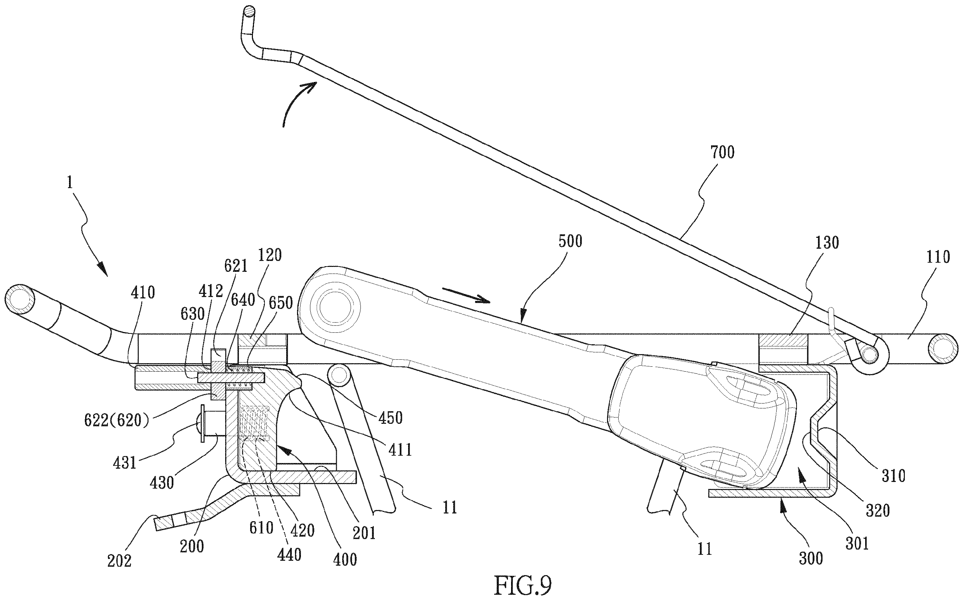

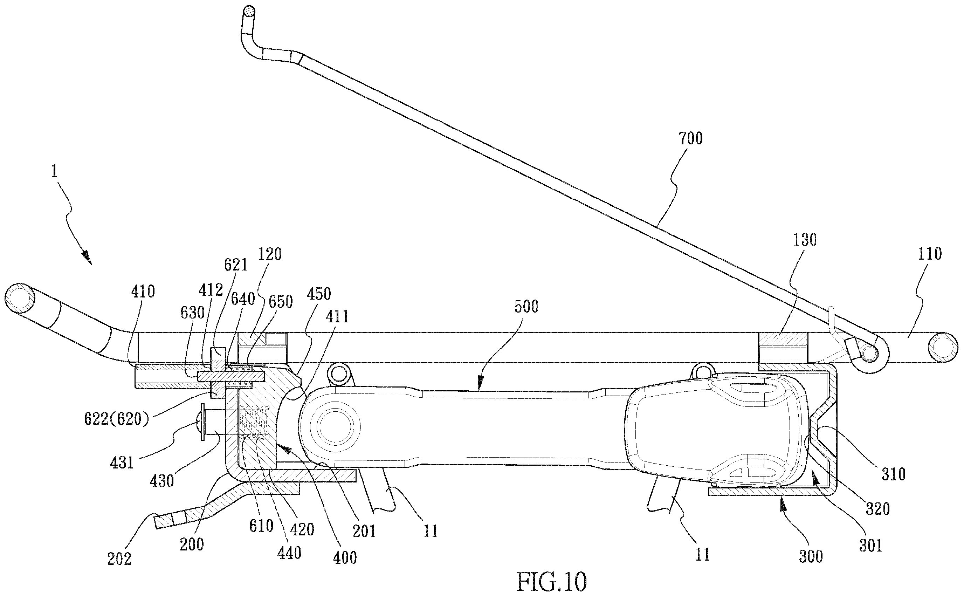

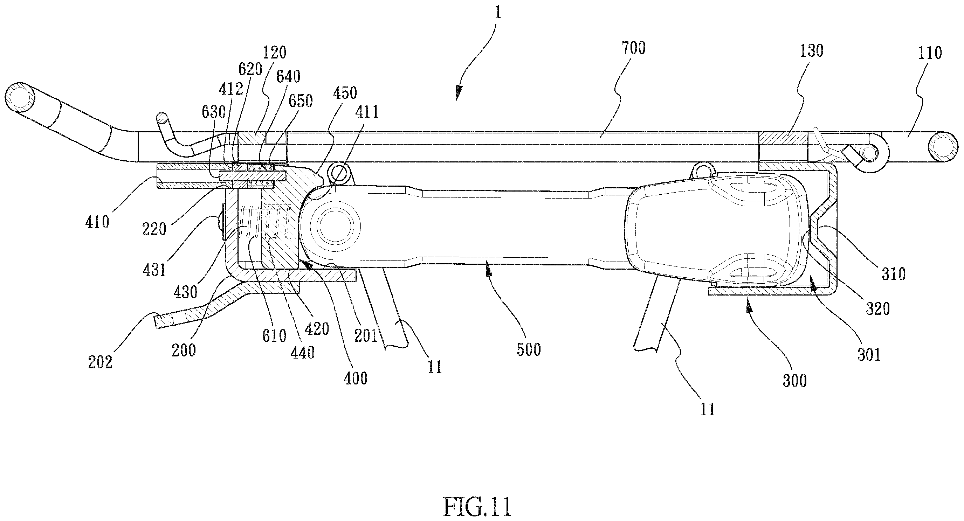

Referring to FIGS. 9-11, a lock (500) is disposed in the front space (201) and the rear space (301) with two ends of the lock (500); wherein the front end of the lock (500) is complemented with the limiting arc surface (411) and movably limited by the limiting arc surface (411), the rear end of the lock (500) is limited in the rear space (301), so that the lock (500) is accommodated in the bicycle carrier (1).

When moving the outer portion (410) of the limiting unit (400) to the direction of the rear unit (300), the limiting arc surface (411) of the limiting unit (400) is away from the lock (500) and releases the lock (500), so that the lock (500) can be removed from the front space (201) and the rear space (301).

In one embodiment, the aforementioned lock (500) can be a folding lock for example.

In one embodiment, the bicycle carrier (1) of the present disclosure is a rear carrier. In operation, the lock (500) is disposed into the rear space (301) with the rear end first and then the front end of the lock (500) is disposed into the front space (201). It should be noted that the bicycle carrier (1) of the present disclosure can be assembled on the bicycle carrier through the two side brackets (11), and the support (202) at the bottom of the front unit (200) can be assembled on the bicycle or the back fender.

In addition, the front unit (200) refers to the riding direction of the bicycle.

The present disclosure provides a bicycle carrier with the lock accommodated in the carrier. Unlike the conventional locks that are required to be assembled on the frame of the bicycle with additional devices, the present disclosure provides a bicycle carrier with a lock that can avoid accidental collision between the lock and the bicycle frame, and also avoid surface damage to the bicycle that caused by assembling the additional devices on the bicycle frame.

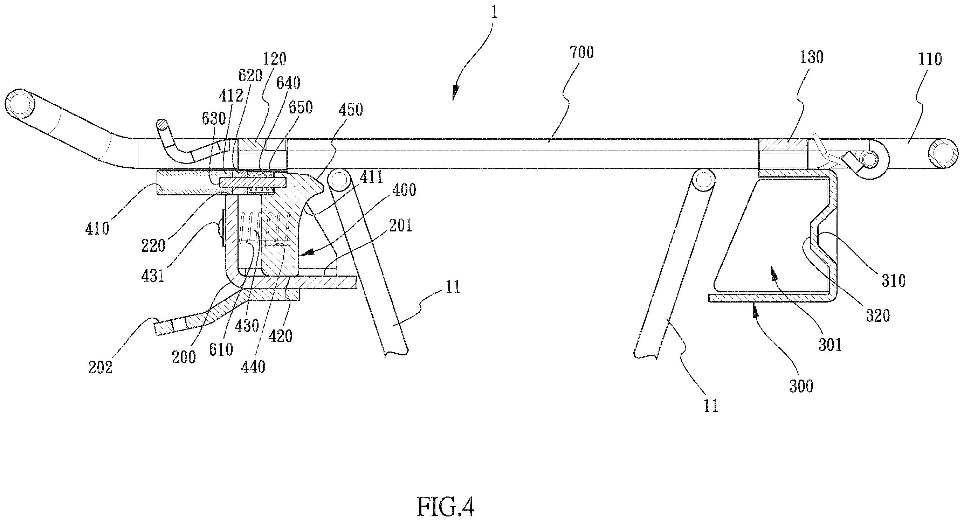

It should be noted that FIGS. 4-11 of the present disclosure show the related operations of the lock (500) accommodated in the bicycle carrier (1) and reverse the aforementioned operation can detach the lock (500) from the bicycle carrier (1).

Further, the detailed features of each component of the bicycle carrier (1) and the effects produced by the combined operation among them will be described.

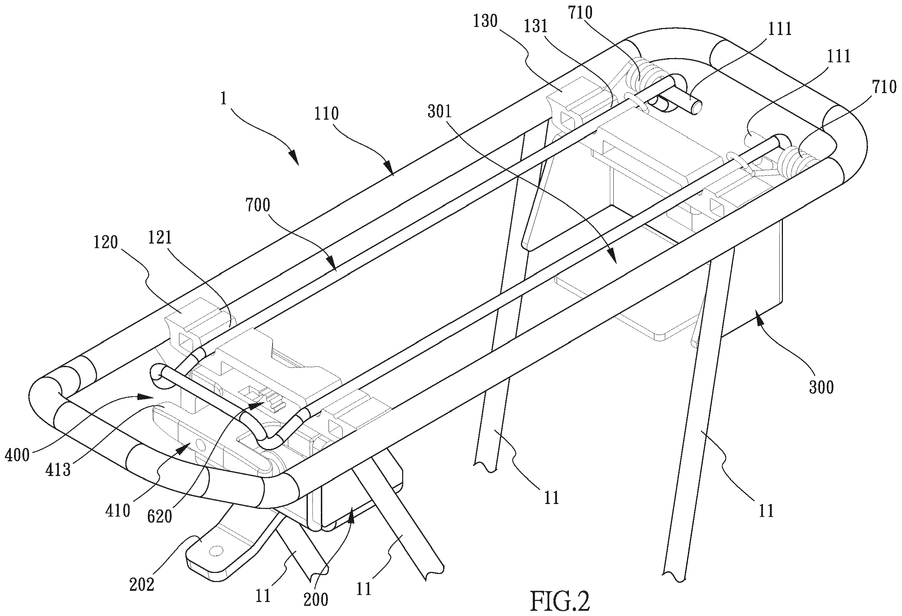

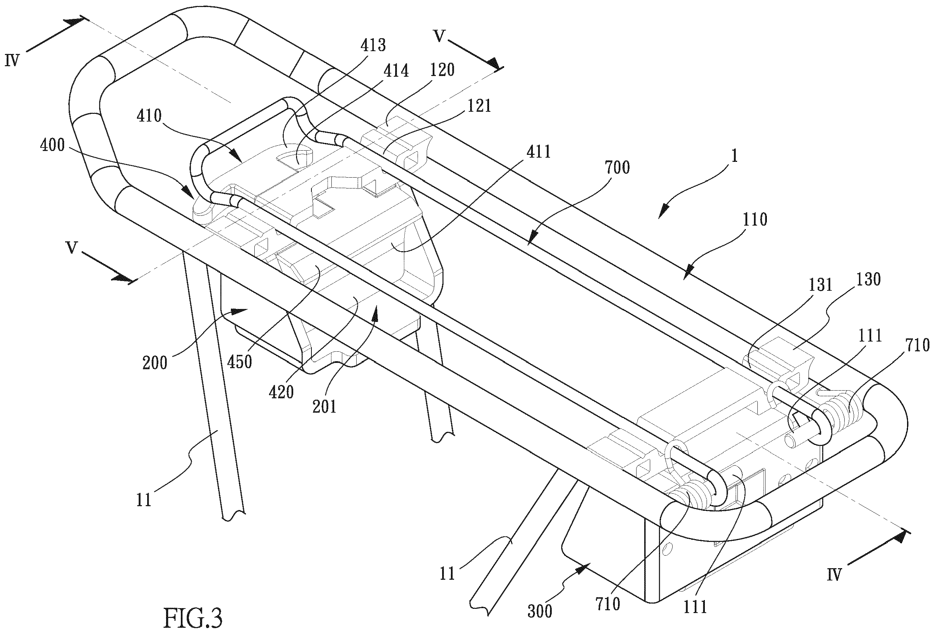

As shown in FIG. 2 and FIG. 3, the bicycle carrier (1) further includes a frame (110) and
a front support rib (120) and a rear support rib (130); wherein the front support rib (120) and the rear support rib (130) are assembled within the frame (110); wherein the front unit (200) and the rear unit (300) are assembled under the front support rib (120) and the rear support rib (130) respectively. The front unit (200) and the rear unit (300) are disposed and located under the frame (110), so that the bicycle carrier (1) still keeps the function of carrying goods. In one embodiment, the lock (500) is accommodated in the bicycle carrier (1) from the tip side.

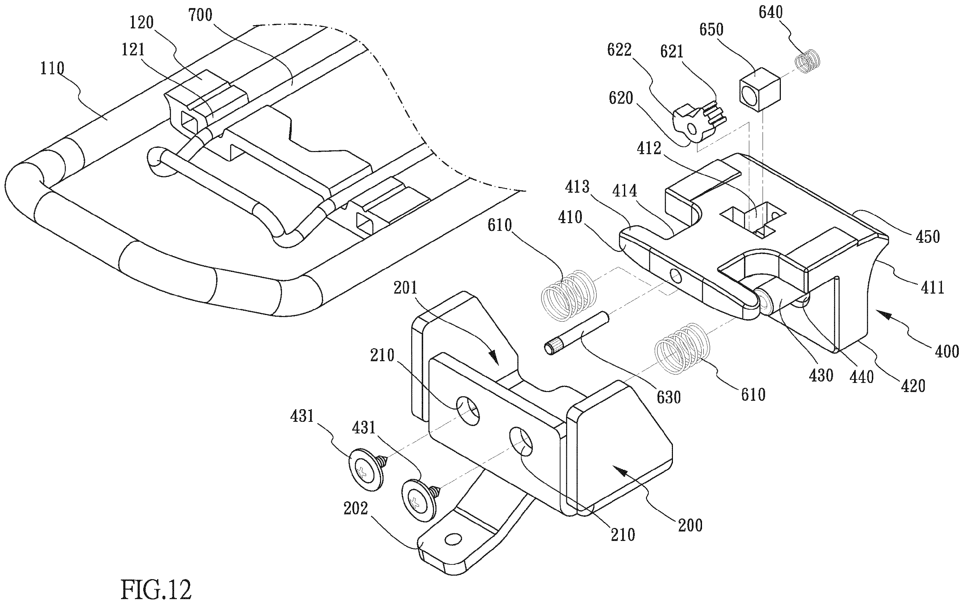

The bicycle carrier (1) further includes a compression spring (610) disposed in the front space (201); wherein the compression spring (610) elastically pushes the limiting unit (400) toward the rear unit (300). Referring to FIG. 4 and FIG. 12, by the configuration, the compression spring (610) can be pushed against the limiting unit (400) continuously, so as to maintain the lock (500) in a stored state and keep the lock (500) stable without detaching from the bicycle carrier (1) during riding.

In one embodiment, the front unit (200) has a front assembly hole (210), and the limiting unit (400) has an assembly rod (430); wherein the compression spring (610) is sleeved around the assembly rod (430), and the assembly rod (430) detachable passes through the assembly hole (210) and fastened by an assembly buckle (431), as shown in FIG. 4 and FIG. 12. By the assembly buckle (431), the position of the front unit (200) can be limited, so that the limiting unit (400) can be retained at the front space (201) during the compression spring (610) compressing the limiting unit (400) toward the direction of the rear unit (300).

In one embodiment, the limiting unit (400) has a limited groove (440); wherein the assembly rod (430) extends from the bottom surface of the limited groove (440) to the outside of the notch of the limited groove (440), and the compression spring (610) is partly located in the limited groove (440) and compresses against the bottom surface of the limited groove (440). The detailed figures can be seen in FIGS. 4-5. In one embodiment, the compression spring (610) has enough space to be accommodated between the front space (201) and the limiting unit (400), and the compression spring (610) can be retained partly in the limited groove (440), so as to prevent the compression spring (610) from being accidentally disengaged from the assembly rod (430).

Referring to FIGS. 4-8 and FIG. 12, the bicycle carrier (1) further includes a switch (620) and a switch shaft (630), and the outer portion (410) of the limiting unit (400) has a switch hole (412) passing through the outer portion (410); wherein the switch shaft passes through the switch (620) and disposed in the switch hole (412).

The switch (620) has a switch dial (621) exposed from the switch hole (412) and the outer portion (410), and a switch stopper (622) corresponding to the switch dial (621) and disposed in the switch hole (412); wherein when switching the switch dial (621) of the switch (620), the switch stopper (622) moves outward from the switch hole (412) to be exposed outside the switch hole (412) and abutted against the outer side of the front unit (200). In one embodiment, when the switch stopper (622) is located in the switch hole (412), the user can pull the limiting unit (400) to switch the lock (500) from the storage state to the release storage state. When the user intends to take off the lock (500) from the bicycle carrier (1), the user pulls the limiting unit (400) toward the opposite direction to the rear unit (300), so that the limiting arc surface (411) releases holding the lock (500), then the user switches the switch (620) to move the switch stopper (622) from the switch hole (412) outward to abut against the outer surface of the front unit (200). So that, the position of the limiting unit (400) can be retained. The user can take off the lock (500) from the bicycle carrier (1) easily against the force of the compression spring (610).

Referring to FIGS. 4-8 and FIG. 12, the bicycle carrier (1) further includes a torsion spring (640) sleeved around the switch shaft (630), and the two ends of the torsion spring (640) are respectively fixed on the limiting unit (400) and the switch (620). In one embodiment, the torsion spring (640) drives the switch stopper (622) of the switch (620) to be located in the switch hole (412) continuously, when switching the switch dial (621) of the switch (620), the switch stopper (622) moves from the switch hole (412) outward to abut against the outer side of the front unit (200). At this time, the torsion spring (640) is in the state of being twisted and deformed to store power, which can keep the bicycle carrier (1) in the unstored state until the user switches the switch (620) and moves the switch dial (621). With the recovery of the torsion spring (640), the switch stopper (622) of the switch (620) is driven back to the position within the switch hole (412), and then the compression spring (610) directly resets the limiting unit (400), which is the storage state of the above-mentioned bicycle carrier (1).

Referring to FIG. 12, the switch hole (412) has a wide segment and a narrow segment connected to the wide segment; wherein the switch (620) is located at the wide segment, and a buffer block (650) is located at the narrow segment; wherein the buffer block (650) is near the switch (620) and is passed through by the switch shaft (630). The torsion spring (640) passes through the buffer block (650). In one embodiment, the torsion spring (640) is located under the buffer block (650), so that the torsion spring (640) can be limited and prevented from directly detaching from the switch shaft (630).

Referring to FIG. 12, Further, the outer portion (410) has a handle (413) and a finger part (414). In one embodiment, when the user is moving the limiting unit (400) toward the opposite direction to the rear unit (300), the fingers can be placed in the finger part (414) and hold the handle (413), so that the limiting unit (400) can be operated stably.

Referring to FIG. 4 and FIG. 12, the top of the limiting unit (400) has a guiding surface (450) near the limiting arc surface (411), and the guiding surface (450) is in a shape of inclining gradually from the top to the bottom of the limiting unit (400). In one embodiment, when the user is storing the lock (500) into the bicycle carrier (1), the rear end of the lock (500) will be placed into the rear space (301) of the rear unit (300), and then the bottom of the front end of the lock (500) will be guided by the guiding surface (450) and pressed into the front space (201). The limiting unit (400) will be pushed toward the opposite direction of the rear unit (300) when pressing the front end of the lock (500). The limiting unit (400) compresses the compression spring (500), until the front end of the lock (500) is placed into the front space (201), the compression spring (610) elastically drives the limiting unit (400) to reset and contacts the front end of the lock (500) with the limiting arc surface (411), thereby the storage state of the lock (500) in the bicycle carrier (1) is completed.

Referring to FIG. 12, the front unit (200) has a front open (220), the outer portion (410) of the limiting unit (400) passes through the front open (22) and extends outward opposite to the rear unit (300), so that part of the outer portion (410) of the limiting unit (400) is exposed to the front side of the front unit (200).

As shown in FIG. 4, the rear unit (300) has a concave part (310) from outside toward the rear space (301), and the concave part (310) forms a convex part (320) in the rear space (301); wherein the rear end of the lock (500) abuts against the convex part (320) when the rear end of the lock (500) is disposed in the rear space (301). By the configuration, the convex part (320) not only limits the lock (500), but also improves the structural strength of the rear unit (300). In addition, the rear unit (300) can be assembled with warning reflectors or rear warning lights.

As shown in FIG. 2, the bicycle carrier (1) further includes a carrier clip (700) and a clip spring (710. The carrier clip (700) has a pivot ring (701) hooked on a pivot (111) of the frame (110), and the clip spring (710) is sleeved around the pivot (111) and abutted between the pivot ring (701) and frame (110), so that the carrier clip (700) is retained in a front clip groove (121) of the front support rib (120) and rear clip groove (131) of the rear support rib (130). In one embodiment, the carrier clip (700) is located at the top and the lock (500) is located at the bottom of the frame (110). Therefore, the space of the bicycle carrier (1) can be well used.

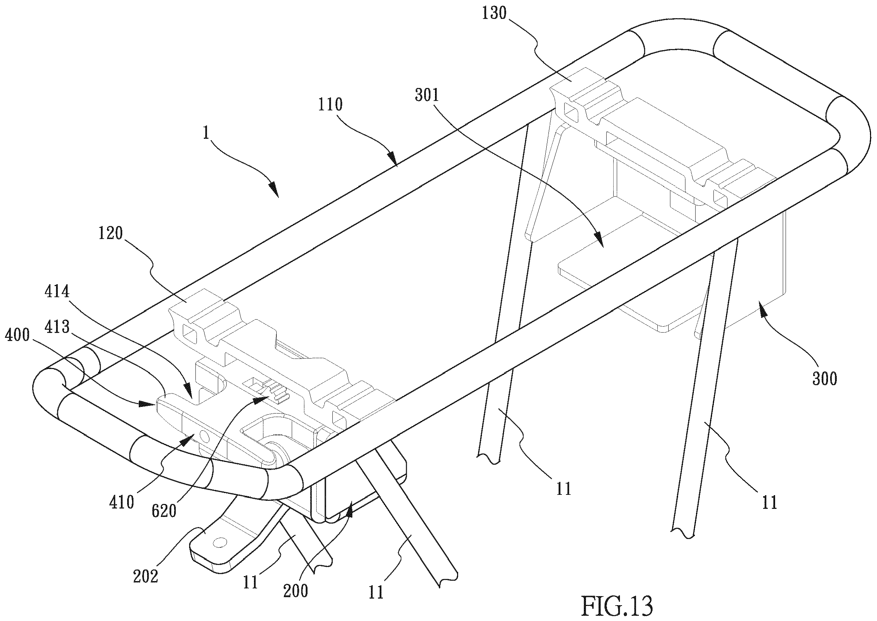

As shown in FIGS. 1-12, the bicycle carrier (1) has a carrier clip (700) as an example. As shown in FIG. 13, the bicycle carrier (1) does not have a carrier clip (700). The bicycle carrier (1) without a carrier clip (700) is more convenient than the bicycle carrier (1) with the carrier clip (700) (as shown in FIGS. 1-12. When the carrier clip (700) is not in use (as shown in FIG. 1, the carrier clip (700) covers the lock (500), so that the user has to hold the carrier clip (700) to take or place the lock (500). Therefore, the bicycle carrier (1) without the carrier clip (700) omits the above actions.

## Claims

1. A bicycle carrier (1), comprising: a front unit (200), a rear unit (300), and a limiting unit (400);
wherein the front unit (200) and the rear unit (300) are spaced apart; wherein the front unit (200) has a front space (201) and the rear unit (300) has a rear space (301);
wherein the limiting unit (400) has an outer portion (410) and an inner portion (420) connected to the outer portion (410), the inner portion (420) is located in the front space (201), and the outer portion (410) extends outside the front unit (200); wherein the inner portion (420) has a limiting arc surface (411) facing the direction of the rear space (301);
wherein a fastener (500) is disposed in the front space (201) and the rear space (301) with two ends of the fastener (500); wherein the front end of the fastener (500) is complemented with the limiting arc surface (411) and movably limited by the limiting arc surface (411), the rear end of the fastener (500) is limited in the rear space (301), so that the fastener (500) is accommodated in the bicycle carrier (1);
wherein when moving the outer portion (410) of the limiting unit (400) to the direction of the rear unit (300), the limiting arc surface (411) of the limiting unit (400) is away from the lock (500) and releases the lock (500), so that the lock (500) can be removed from the front space (201) and the rear space (301).

2. The bicycle carrier (1) according to claim 1, including a frame (110) and front support rib (120), and a rear support rib (130); wherein the front support rib (120) and the rear support rib (130) are assembled within the frame (110); wherein the front unit (200) and the rear unit (300) are assembled under the front support rib (120) and the rear support rib (130) respectively.

3. The bicycle carrier (1) according to claim 1, further including a compression spring (610) disposed in the front space (201); wherein the compression spring (610) elastically pushes the limiting unit (400) toward the rear unit (300).

4. The bicycle carrier (1) according to claim 3, wherein the front unit (200) has a front assembly hole (210), and the limiting unit (400) has an assembly rod (430); wherein the compression spring (610) is sleeved around the assembly rod (430), and the assembly rod (430) detachable passes through the assembly hole (210) and fastened by an assembly buckle (431).

5. The bicycle carrier (1) according to claim 4, wherein the limiting unit (400) has a limited groove (440); wherein the assembly rod (430) extends from the bottom surface of the limited groove (440) to the outside of the notch of the limited groove (440), and the compression spring (610) is partly located in the limited groove (440) and compresses against the bottom surface of the limited groove (440).

6. The bicycle carrier (1) according to claim 1, further including a switch (620) and a switch shaft (630); wherein the outer portion (410) of the limiting unit (400) has a switch hole (412) passing through the outer portion (410); wherein the switch shaft passes through the switch (620) and is disposed in the switch hole (412); wherein the switch (620) has a switch dial (621) exposed from the switch hole (412) and the outer portion (410), and a switch stopper (622) corresponding to the switch dial (621) and being disposed in the switch hole (412); wherein when switching the switch dial (621) of the switch (620), the switch stopper (622) moves outward from the switch hole (412) to be exposed outside the switch hole (412) and abutted against the outer side of the front unit (200).

7. The bicycle carrier (1) according to claim 6, further including a torsion spring (640) sleeved around the switch shaft (630), and the two ends of the torsion spring (640) being respectively fixed on the limiting unit (400) and the switch (620).

8. The bicycle carrier (1) according to claim 6, wherein the switch hole (412) has a wide segment and a narrow segment connected to the wide segment; wherein the switch (620) is located at the wide segment, and a buffer block (650) is located at the narrow segment; wherein the buffer block (650) is near the switch (620) and is passed through by the switch shaft (630).

9. The bicycle carrier (1) according to claim 1, wherein the outer portion (410) has a handle (413) and a finger part (414).

10. The bicycle carrier (1) according to claim 1, wherein the top of the limiting unit (400) has a guiding surface (450) near the limiting arc surface (411), and the guiding surface (450) is in a shape of inclining gradually from the top to the bottom of the limiting unit (400).

11. The bicycle carrier (1) according to claim 1, wherein the front unit (200) has a front open (220), the outer portion (410) of the limiting unit (400) passes through the front open (22) and extends outward opposite to the rear unit (300), so that part of the outer portion (410) of the limiting unit (400) is exposed to the front side of the front unit (200).

12. The bicycle carrier (1) according to claim 1, wherein the rear unit (300) has a concave part (310) from outside toward the rear space (301), and the concave part (310) forms a convex part (320) in the rear space (301); wherein the rear end of the lock (500) abuts against the convex part (320) when the rear end of the lock (500) is disposed in the rear space (301).

13. The bicycle carrier (1) according to claim 2, further including a carrier clip (700) and a clip spring (710); wherein the carrier clip (700) has a pivot ring (701) hooked on a pivot (111) of the frame (110), and the clip spring (710) is sleeved around the pivot (111) and abutted between the pivot ring (701) and frame (110), so that the carrier clip (700) is retained in a front clip groove (121) of the front support rib (120) and rear clip groove (131) of the rear support rib (130).
